# EUROPÄISCHE PATENTSCHRIFT

(11) **EP 3 496 927 B1**
(45) Veröffentlichungstag und Bekanntmachung des Hinweises auf die Patenterteilung: **04.11.2020**
(21) Anmeldenummer: 17745285.1
(22) Anmeldetag: 13.07.2017
(51) Int. Cl.: B29C 45/26, B29C 33/30, B29C 33/00

(54) **VORRICHTUNG ZUM FORMEN VON GEGENSTÄNDEN**
DEVICE FOR MOLDING OBJECTS
DISPOSITIF POUR MOULER DES OBJETS

(30) Priorität: 15.07.2016 DE 102016113088
(43) Veröffentlichungstag der Anmeldung: 19.06.2019
(73) Patentinhaber: Priamus System Technologies Branch Of Barnes Group Suisse Industries LLC, 8200 Schaffhausen (CH)
(72) Erfinder: BADER, Christopherus, 8212 Neuhausen am Rheinfall (CH)
(74) Vertreter: Rentsch Partner AG
(86) Internationale Anmeldenummer: PCT/EP2017/067725
(87) Internationale Veröffentlichungsnummer: WO 2018/011352

(56) Entgegenhaltungen:
- DE-A1- 3 918 250
- DE-A1-102006 046 528
- US-A1- 2006 034 970
- "SCHNELLER WERKZEUG-WECHSEL MIT UNIVERSELLEN MULTIKUPPLUNGEN", PLASTVERARBEITER, HUETHIG GMBH, HEIDELBERG, DE, Bd. 42, Nr. 3, 1. März 1991 (1991-03-01), Seite 134,136, XP000233257, ISSN: 0032-1338
- LAMPL A: "WIRTSCHAFTLICHE FERTIGUNG KLEINER SERIEN VON GUMMIFORMTEILEN IM SPRITZGIESSVERFAHREN", KAUTSCHUK UND GUMMI - KUNSTSTOFFE, HUTHIG VERLAG, HEIDELBERG, DE, Bd. 42, Nr. 3, 1. März 1989 (1989-03-01), Seiten 222-227, XP000052639, ISSN: 0948-3276

## Beschreibung

Die Erfindung betrifft eine Vorrichtung nach dem Oberbegriff des Anspruchs 1.

### Stand der Technik

Spritzgiesswerkzeuge sind in vielfacher Form und Ausführung bereits auf dem Markt bekannt. Es gibt Werkzeuge, bei denen das Formteil, welches einen Teil der Kavität ausbildet, direkt aus einer Formplatte heraus oder in eine Formplatte hinein geformt ist. Üblicherweise wird hierzu jedoch ein Einsatz in einer Formplatte verwendet, der bspw. bei Verschleiss oder einer konstruktiven Änderung ausgetauscht werden kann. Die eigentliche Werkzeugplatte bleibt die gleiche, lediglich der Einsatz wird ersetzt.

In diesem Zusammenhang wird auf die US 2006/0034970 A1 wird ein Spritzgiesswerkzeug gemäß dem Oberbegriff des Anspruchs 1 offenbart.

Auch in der Zeitschrift PLASTVERARBEITER 42. Jahrgang 1991 Nr.3 Seiten 134 und 136 ist ein schneller Werkzeugwechsel mit universellen Multikupplungen beschrieben.

Zusätzlich findet sich auch in der Zeitschrift Kautschuk + Gummi Kunststoffe, 42. Jahrgang, Nr. 3/89, Seiten 222 bis 227 ein Artikel "Wirtschaftliche Fertigung kleiner Serien von Gummiformteilen im Spritzgiessverfahren" mit der Beschreibung verschiedener Herstellungsverfahren nach dem damaligen Stand der Technik.

Weiter ist in der DE 39 18 250 A1 ist eine selbstdichtende Anschlusskupplung vornehmlich für Temperierflüssigkeit führende Leitungen an Kunststoff-Spritzgiesswerkzeugen offenbart.

Weiter ist in der DE 10 2006 046 528 A1 ein Kunststoff-Spritzgusswerkzeug offenbart, wobei verschiedene Versorgungsleitungen über eine Kupplung ein schnelles Wechseln der Werkzeuge ermöglicht.

Es kommt auch vor, dass Einsätze während einer Produktion innerhalb kürzester Zeit gewechselt und durch andere Einsätze ersetzt werden müssen, um neue Spritzteile mit neuen Geometrien herzustellen. Hierbei wird das auf der Maschine aufgespannte Spritzgiesswerkzeug unverändert wiederverwendet, während nur die Werkzeugeinsätze ersetzt werden. Es ist sogar denkbar, dass der Wechsel eines solchen Einsatzes vollautomatisch mit Hilfe eines Roboters erfolgt.

In der Praxis werden nicht nur Spritzgiesswerkzeuge mit einem einzigen Formhohlraum (Kavität) und einem einzigen Werkzeugeinsatz verwendet, sondern auch Mehrkavitätenwerkzeuge mit jeweils einem Werkzeugeinsatz pro Kavität. Auch hier werden diese Werkzeugeinsätze, wie oben beschrieben, aus unterschiedlichen Gründen gewechselt.

Die WO 2006 027173 A1 beschreibt einen solchen Einsatz. In dem Einsatz befindet sich ein erstes Kupplungsteil, welches mit einem zweiten Kupplungsteil in der Formplatte verbindbar ist. Das bedeutet, dass beim Ausbau eines Einsatzes auch die Kupplung gelöst und beim Einbau eines neuen Einsatzes ohne Schwierigkeiten eine neue Kupplung hergestellt werden kann.

Die Kupplung selbst ist als Schnellkupplung ohne Verriegelung ausgestaltet. Am einfachsten handelt es sich um eine Steckkupplung, bei der ein Stecker in eine Dose eingesetzt wird.

Derartige Kupplungen, die insbesondere aus mehreren Teilen bestehen, können erhebliche Ungenauigkeiten aufweisen und erschweren somit den Wechsel. Im schlimmsten Fall passt das Kupplungsteil in der Formplatte nicht auf das Kupplungsteil im Einsatz und ein neuer Einsatz muss hergestellt werden. Dies gilt im Übrigen generell für Steckerkupplungen und nicht nur im Fall der Kupplung von Werkzeugeinsätzen. Grundsätzlich gilt es für alle automatischen Verbindungen von positiven/männlichen Steckern und negativen/weiblichen Kupplungen.

### Aufgabe

Die Aufgabe der vorliegenden Erfindung ist es, die eventuellen Ungenauigkeiten auszugleichen.

### Lösung der Aufgabe

Zur Lösung dieser Aufgabe führen die Merkmale nach Anspruch 1.

Schwimmend gelagert heisst, dass die Abstände zwischen z.B. zwei Elementen des Kupplungsteils veränderbar sind. Radial bedeutet senkrecht zu einer gedachten Achse des Kupplungsteils bzw. zu einer gedachten Achse einer Ausnehmung, in der das Kupplungsteil sitzt. Dadurch kann das Kupplungsteil in der Formplatte hin und her bewegt werden und Ungenauigkeiten des Einsatzes oder der Ausrichtung der Kupplungsteile ausgleichen. Beispielsweise kann ein Kupplungsteil mit einem Aussenring in die Formplatte bzw. den Einsatz eingeschraubt sein. In diesem Aussenring steckt eine Aussenhülse, die einen Stecker umgibt. Gemäss der vorliegenden Erfindung liegt der Aussenring nicht dicht der Aussenhülse an, sondern hält einen Abstand ein, der veränderbar ist. Die Aussenhülse kann somit in dem Aussenring radial schwimmen. Diese schwimmende Lagerung kann insbesondere herstellungstechnisch bedingte Ungenauigkeiten ausgleichen.

Im Rahmen der vorliegenden Erfindung ist aber auch daran gedacht, die seitlichen Abstände zwischen dem Einsatz und der Formplatte selbst veränderbar auszugestalten. Auch diese veränderbaren Abstände führen dazu, dass Ungenauigkeiten ganz leicht ausgeglichen werden und jeder Einsatz passen wird, auch wenn diese Ungenauigkeiten im µ-Bereich liegen.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
**Figur 1** eine teilweise im Querschnitt dargestellte Seitenansicht eines Formwerkzeugs in einer ersten Gebrauchslage;

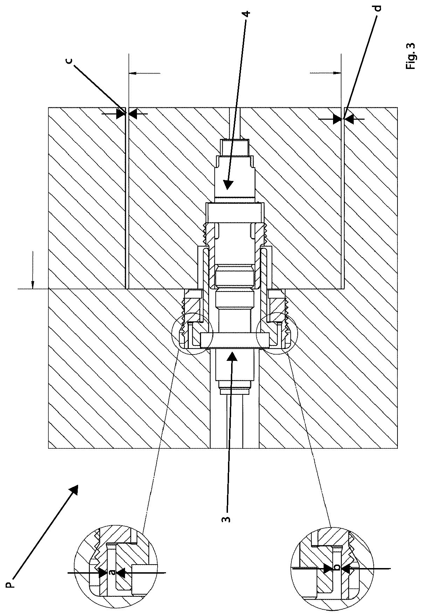

**Figur 2 - 5** eine teilweise im Querschnitt dargestellte Seitenansicht gemäss Figur 1 in weiteren Gebrauchslagen.

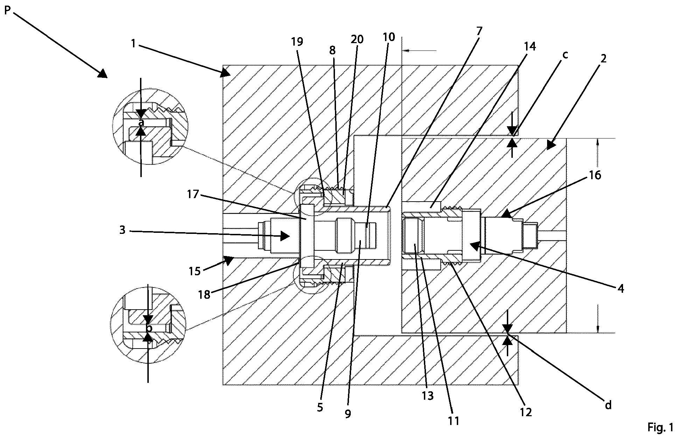

Gemäss Figur 1 weist ein Spritzgiesswerkzeug P eine Formplatte1 sowie einen Einsatz 2 auf. Der Formplatte 1 ist ein Kupplungsteil 3 und dem Einsatz 2 ein weiteres Kupplungsteil 4 zugeordnet. Zur Aufnahme des Kupplungsteils 3 ist in der Formplatte 1 eine Stufenbohrung 15 vorgesehen, ebenso befindet sich zur Aufnahme des Kupplungsteils 4 in dem Einsatz 2 eine Stufenbohrung 16.

Im Wesentlichen weist das Kupplungsteil 3 einen Stecker 9 auf, der von einer Aussenhülse 5 umfangen ist. Diese Aussenhülse 5 ist einem Flansch 17 des Steckers 9 aufgesetzt. Der Flansch 17 liegt einer Schulter 18 der Stufenbohrung 15 in der Formplatte 1 an.

Die Aussenhülse 5 bildet ebenfalls eine Stufe 19 aus, auf die ein Aussenring 20 drückt. Der Aussenring 20 weist ein Aussengewinde 8 auf und kann so in die Stufenbohrung 15 eingeschraubt werden. Dabei presst er die Aussenhülse 5 gegen den Flansch 17 und diesen gegen die Schulter 18 der Stufenbohrung 15.

Erfindungsgemäss ist zwischen dem Aussenring 20 und der Aussenhülse 5, wie durch vergrösserte Ausschnitte dargestellt, ein Abstand a bzw. b vorgesehen. Im Bereich dieser Abstände a bzw. b ist die Aussenhülse 5 in dem Aussenring 20 schwimmend gelagert, wodurch sich auch eine schwimmende Lagerung des Flansches 17 ergibt.

Das Kupplungsteil 4 im Einsatz 2 weist ebenfalls eine Aussenhülse 11 auf, die jedoch direkt über eine Schraubverbindung 12 mit dem Einsatz 2 verbunden ist. Innerhalb der Aussenhülse 11 verbirgt sich eine Aufnahmedose 13. Des weiteren ist um die Aussenhülse 11 des Einsatzes 2 eine Aufnahme 14 ausgebildet.

Ebenfalls weisen die Formplatte 1 und der Einsatz Abstände c und d auf, wobei auch diese in der hier gezeigten Gebrauchslage gleich gross sind.

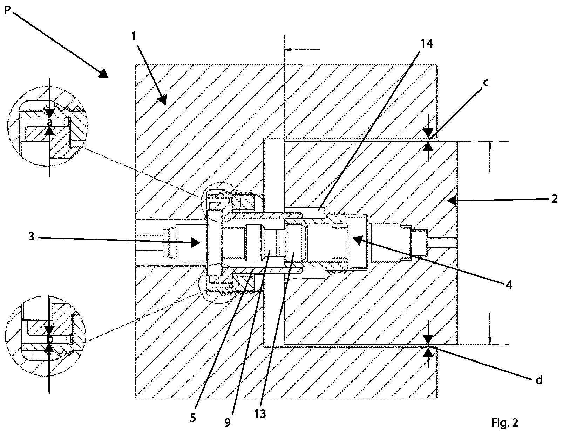

Gemäss Figur 2 ist eine weitere Gebrauchslage des Spritzgiesswerkzeugs P aufgezeigt. Hier ist deutlich erkennbar, dass der Einsatz 2 tiefer in die Formplatte 1 eingeschoben ist. Das Ende 7 der Aussenhülse 5 des Kupplungsteils 3 greifen nun in die Aufnahme 14 des Einsatzes 2 ein und beginnen die Aussenhülse 1 des Kupplungsteils 4 zu umschliessen. Auch der Stecker 9 des Kupplungsteils 3 fährt in die Aufnahmedose 13 des Kupplungsteils 4 ein. Die Abstände a, b, c und d sind unverändert.

Das gleiche gilt auch für die letzte Gebrauchslage dieses ordnungsgemässen Zusammenbaus von Einsatz in die Formplatte, bei dem sich die Zuordnung zueinander, d.h. insbesondere die oben erwähnten Abstände, nicht verändert haben.

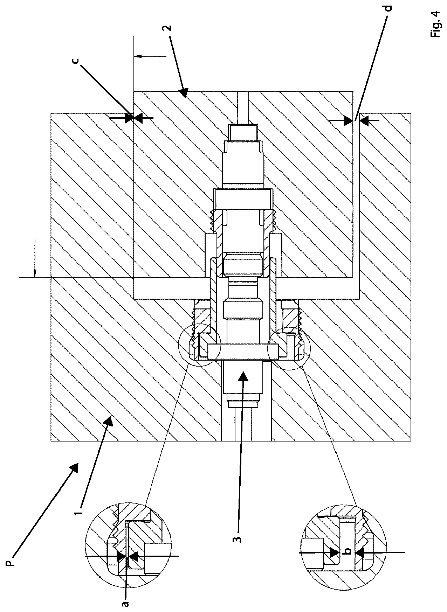

In Figur 4 wird das Spritzgiesswerkzeug P mit Passungenauigkeiten gezeigt, wobei deutlich wird, dass das Kupplungsteil 3 schwimmend in der Formplatte 1 gelagert ist. Der Einsatz 2 ist, aus welchen Gründen auch immer, seitlich versetzt, so dass die Abstände a und c kleiner und die Abstände b und d grösser geworden sind.

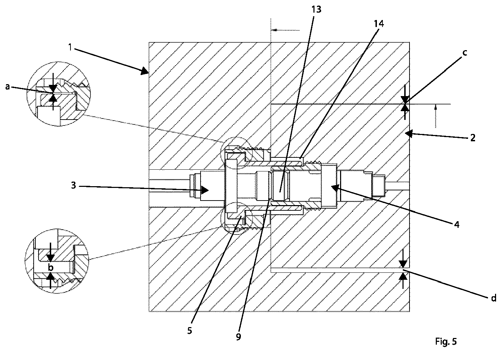

Der Einsatz 2 ist in der weiteren Gebrauchslage gemäss Figur 5 gänzlich in die Formplatte 1 eingeschoben, und es besteht über die beiden Kupplungsteile 3 und 4 eine funktionsfeste Verbindung. Das Ende 7 der Aussenhülse 5 des Kupplungsteils 3 ist in dieser Gebrauchslage vollständig in die Aufnahme 14 des Einsatzes 2 und der Stecker 9 in die Aufnahmedose 13 des Kupplungsteils 4 eingetaucht. Der Stecker 9 wird über einen nicht mehr sichtbaren Ringwall 10 in der Aufnahmedose 13 gehalten. Die Abstände a, b, c und d verändern sich in dieser Gebrauchslage nicht weiter.

Die Abstände sind in den Zeichnungen übertrieben dargestellt. In Wirklichkeit geht es hier um Ungenauigkeiten im µ-Bereich.

**Bezugszeichenliste**

| | | | | | |
|---|---|---|---|---|---|
| 1 | Formplatte | 34 | | 67 | |
| 2 | Einsatz | 35 | | 68 | |
| 3 | Kupplunpsteil | 36 | | 69 | |
| 4 | Kupplunpsteil | 37 | | 70 | |
| 5 | Aussenhülse | 38 | | 71 | |
| 6 | | 39 | | 72 | |
| 7 | Ende | 40 | | 73 | |
| 8 | Aussengewinde | 41 | | 74 | |
| 9 | Stecker | 42 | | 75 | |
| 10 | Ringwall | 43 | | 76 | |
| 11 | Aussenhülse | 44 | | 77 | |
| 12 | Schraubverbindung | 45 | | 78 | |
| 13 | Aufnahmedose | 46 | | 79 | |
| 14 | Aufnahme | 47 | | | |
| 15 | Stufenbohrung | 48 | | | |
| 16 | Stufenbohrung | 49 | | | |
| 17 | Flansch | 50 | | | |
| 18 | Schulter | 51 | | | |
| 19 | Stufe | 52 | | | |
| 20 | Aussenring | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung zum Formen von Gegenständen in einer Kavität, die zumindest teilweise von einem Einsatz (2) in einer Formplatte (1) gebildet ist, wobei in der Formplatte (1) ein Kupplungsteil (3) angeordnet ist, das mit einem weiteren Kupplungsteil (4) in dem Einsatz (2) verbindbar ist, wobei das/die Kupplungsteil/e (3, 4) in der Formplatte (1) und/oder in dem Einsatz (2) in radialer Richtung schwimmend gelagert ist/sind,
**dadurch gekennzeichnet,**
**dass** das Kupplungsteil (3) eine Aussenhülse (5) aufweist, die von einem Aussenring (20) umfangen ist, wobei ein Abstand (a, b) zwischen Aussenhülse (5) und Aussenring (20) des Kupplungsteils (3) veränderbar ist.

2. Vorrichtung nach Anspruch 1, **dadurch gekennzeichnet, dass** Abstände (a, b) zwischen zumindest zwei Elementen (5,20) des Kupplungsteils (3,4) veränderbar sind.

3. Vorrichtung nach Anspruch 1 oder 2, **dadurch gekennzeichnet, dass** Abstände zwischen Formplatte (1) und/oder Einsatz (2) und dem jeweiligen Kupplungsteil (3,4) veränderbar sind.

4. Vorrichtung nach wenigstens einem der vorhergehenden Ansprüche, **dadurch gekennzeichnet, dass** Abstände (c, d) zwischen der Formplatte (1) und dem Einsatz (2) veränderbar sind.

## Claims

1. Device for moulding objects in a cavity which is at least partially formed by an insert (2) in a mould plate (1), wherein a coupling part (3) is arranged in the mould plate (1), which coupling part is connectable with a further coupling part (4) in the insert (2), wherein the coupling part/coupling parts (3, 4) in the mould plate (1) and/or in the insert (2) is/are mounted in a floating manner in the radial direction,
**characterized in that**
the coupling part (3) comprises an outer sleeve (5) which is surrounded by an outer ring (20), wherein a distance (a, b) between outer sleeve (5) and outer ring (20) of the coupling part (3) can be changed.

2. Device according to Claim 1, **characterized in that** distances (a, b) between at least two elements (5, 20) of the coupling part (3, 4) can be changed.

3. Device according to Claim 1 or 2, **characterized in that** distances between mould plate (1) and/or insert (2) and the respective coupling part (3, 4) can be changed.

4. Device according to at least one of the preceding claims, **characterized in that** distances (c, d) between the mould plate (1) and the insert (2) can be changed.

## Revendications

1. Dispositif pour mouler des objets dans une cavité, qui est formé au moins en partie par un insert (2) dans une plaque de moulage (1), une pièce d'accouplement (3) étant disposée dans la plaque de moulage (1), laquelle peut être connectée à une pièce d'accouplement supplémentaire (4) dans l'insert (2), la ou les pièces d'accouplement (3, 4) dans la plaque de moulage (1) et/ou dans l'insert (2) étant supportées de manière flottante dans la direction radiale,
**caractérisé en ce que**
la pièce d'accouplement (3) présente une douille extérieure (5) qui est entourée par une bague extérieure (20), une distance (a, b) entre la douille extérieure (5) et la bague extérieure (20) de la pièce d'accouplement (3) pouvant être modifiée.

2. Dispositif selon la revendication 1, **caractérisé en ce que** les distances (a, b) entre au moins deux éléments (5, 20) de la pièce d'accouplement (3, 4) peuvent être modifiées.

3. Dispositif selon la revendication 1 ou 2, **caractérisé en ce que** les distances entre la plaque de moulage (1) et/ou l'insert (2) et la pièce d'accouplement respective (3, 4) peuvent être modifiées.

4. Dispositif selon au moins l'une quelconque des revendications précédentes, **caractérisé en ce que** les distances (c, d) entre la plaque de moulage (1) et l'insert (2) peuvent être modifiées.
